# EUROPEAN PATENT APPLICATION

(11) **EP 2 461 599 A1**
(43) Date of publication of application: **06.06.2012**
(21) Application number: 11191613.6
(22) Date of filing: 01.12.2011
(51) Int. Cl.: H04N 21/4147, H04N 21/458, H04N 21/472, H04N 21/63, H04N 21/2343, H04N 21/858, H04N 21/434, H04N 21/8352, H04N 21/462

(54) **Content searching**

(30) Priority: 03.12.2010 GB 201020523
(71) Applicant: Samsung Electronics Co., Ltd., Suwon-si, Gyeonggi-do 442-742 (KR)
(72) Inventor: Alder, Christopher Mark, Staines, Middlesex TW18 4QE (GB); Waller, Arthur Simon, Staines, Middlesex TW18 4QE (GB)
(74) Representative: Brandon, Paul Laurence

(57) **Abstract**

An apparatus, such as a personal video recorder PVR, comprises an input module for receiving information defining a selected programme. The programme may be selected for viewing or recording. The apparatus also comprises a processing module which searches information relating to programmes available from a broadcast stream and another source, such as the Internet or a local storage unit, to find programmes corresponding to the selected programme. The selected programme is associated with an identifier, and corresponding programmes are those which are associated with the same identifier as the selected programme. One of the corresponding programmes may then be chosen as an alternative to the selected programme.

## Description

The present invention relates to searching for content from multiple sources. More particularly, the present invention relates to an apparatus which searches information relating to programmes available in a broadcast stream and another source, such as the Internet or a local hard disk, to find programmes with the same identifier as a selected programme.

Multimedia content such as television programmes and movies can be provided in a range of formats, for example standard-definition (SD), high-definition (HD) and 3-dimensional (3D). The same programme may be available in more than one format, and may be broadcast on a number of channels. For example, a particular programme (i.e. a specific television show or film) may be broadcast on one channel in an SD format, and may also be broadcast on another channel in an HD and/or 3D format. The SD, HD and 3D versions may be broadcast simultaneously or at different times. However, when a particular event is available in different formats from a number of sources, it is difficult for a user to ensure that content is viewed or recorded in the best available format.

According to the present invention, there is provided an apparatus comprising an input module arranged to receive information relating to a selected programme, the selected programme being associated with an identifier, and a processing module arranged to search for programmes corresponding to the selected programme by searching information relating to programmes available in first and second sources for programmes having the same identifier as the selected programme, wherein the first source comprises a broadcast stream.

The second source may comprise the Internet or a source of recorded programmes. The recorded programmes may be programmes which have previously been recorded from the broadcast stream or downloaded from the Internet, and may have been recorded automatically or in response to a user command.

The source of recorded programmes may comprise a local storage unit or a local network. For example, the apparatus may be a personal video recorder (PVR) which includes a local storage unit, such as an internal hard disk, for recording programmes from the broadcast stream and/or Internet, the PVR being configured to search for corresponding programmes amongst recorded programmes stored in the local storage unit.

When a programme is recorded, the apparatus may be configured to store the programme identifier in association with the recorded programme.

The corresponding programmes may comprise programmes broadcast in a plurality of different quality formats and the apparatus may be arranged to provide a corresponding programme having a higher quality as an alternative to the selected programme. The plurality of different quality formats may include SD, HD and 3D formats.

The corresponding programme may be available at a different time to the selected programme.

The selected programme may be a programme selected for recording, and the apparatus may be arranged to determine whether the selected programme is scheduled to be broadcast at a time which conflicts with a broadcast time of a previously booked programme, the previously booked programme being a programme that has been scheduled for recording. The previously booked programme may be a programme which has been selected by a user, or automatically selected by the apparatus based on viewing habits of the user.

In the event of a conflict, the apparatus may be further configured to search for programmes corresponding to the selected programme which do not conflict with the previously booked programme, or to search for programmes corresponding to the previously booked programme which do not conflict with the selected programme.

The apparatus may be configured to search for programmes corresponding to the selected programme or previously booked programme by searching for programmes available in the broadcast stream, on the Internet, and amongst a plurality of recorded programmes.

The apparatus may be configured to schedule one of the corresponding programmes to be recorded instead of the selected programme or the previously booked programme.

The broadcast stream may include link information specifying a location on the Internet at which a programme corresponding to the selected programme is available, the processing module being arranged to navigate to the location to provide the corresponding programme. The link information may link directly to the programme on the Internet, or may link to a web page which plays the programme when the apparatus navigates to the web page.

The broadcast stream may comprise a plurality of content information items defining programmes available via the broadcast stream.

The link information may be associated with each of the content information items.

The apparatus may comprise a DVB compliant apparatus, wherein the content information items comprise Event Information Table EIT events and the link information is stored with each of the EIT events.

The link information may comprise the address of the corresponding programme.

Data may be stored in a Service Description Table SDT, a Network Information Table NIT or a Bouquet Association Table BAT of the broadcast stream to provide a URL prefix, and the EIT may store data which is added to the URL to specify the address of the corresponding programme on the Internet. A single event in the EIT may include a plurality of entries of data to be added to the URL, to link to a plurality of locations on the Internet.

The link information may be separate from the content information items.

The broadcast stream may further include information relating to a time period during which a corresponding programme will be available from the specified location.

The identifier may be a content reference identifier CRID.

The apparatus may further comprise an on-screen display OSD generating unit configured to control a display unit to display information relating to one or more corresponding programmes, and an input device arranged to allow a user to select one of the corresponding programmes. The information relating to one or more corresponding programmes may comprise a list of the corresponding programmes, and the list may also include the selected programme. The display unit may be a television arranged to display a video signal output by the apparatus, for example when the apparatus is a PVR or set-top box. Alternatively, the apparatus may comprise a television, the display unit being a display screen of the television.

According to the present invention, there is further provided a method comprising receiving information defining a selected programme, the selected programme being associated with an identifier, and searching for programmes corresponding to the selected programme by searching information relating to programmes available in first and second sources for programmes having the same identifier as the selected programme.

A computer program, when executed by a processor, may be arranged to perform the method.

Embodiments of the present invention will now be described, by way of example only, with reference to the accompanying drawings, in which:
Figure 1 illustrates a method according to an embodiment of the present invention;
Figures 2A and 2B illustrate a method according to an embodiment of the present invention;
Figure 3 illustrates a method according to an embodiment of the present invention;
Figure 4 illustrates an on-screen display showing a list of programmes corresponding to a selected programme, according to an embodiment of the present invention;
Figure 5 illustrates an on-screen display showing various options to overcome a conflict with a previously booked programme, according to an embodiment of the present invention;
Figure 6 illustrates an on-screen display similar to the one of Fig. 5, in which the previously booked programmes are also available over the Internet;
Figure 7 illustrates an on-screen display giving a user the option to cancel previously booked programmes, according to an embodiment of the present invention;
Figure 8 illustrates an on-screen display for use when no corresponding programmes can be found, according to an embodiment of the present invention; and
Figure 9 schematically illustrates the structure of a personal video recorder according to an embodiment of the present invention.

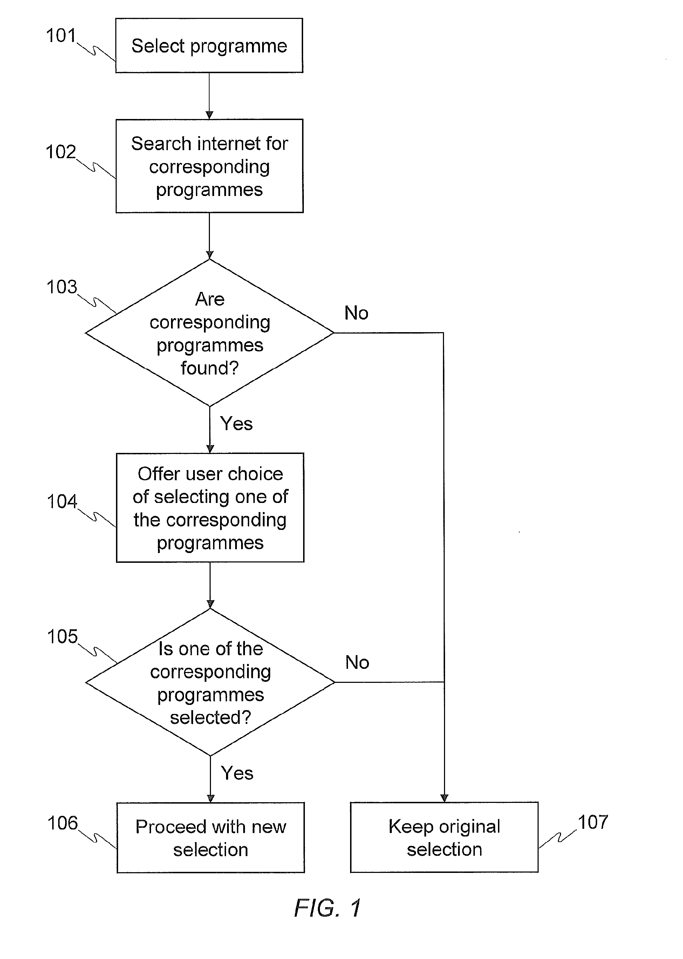

Referring now to Fig. 1, a method is illustrated according to an embodiment of the present invention. The method may be used in apparatus such as a television or a personal video recorder (PVR) connected to a television. The method may be implemented on a digital video broadcasting (DVB) compatible PVR which may include an internal hard disk for recording programmes, but is not restricted to use with the DVB standard.

In a first step 101, a programme is selected from amongst a plurality of programmes in a received broadcast stream. In the present embodiment this selection is made by a user, for example by inputting commands to the apparatus using a remote control. However, in other embodiments, the selection may be made automatically. For instance, the apparatus may automatically select the programme based on known viewing habits of a user. The selected programme can be a programme which is selected for viewing or for recording.

In the second step 102, a search is conducted for programmes which correspond to the selected programme. Specifically, the apparatus is provided with information about programmes which are available in the broadcast stream, and searches this information to find programmes corresponding to the selected programme. When the apparatus is a DVB-compatible receiver, the information about programmes which are available in the broadcast stream is the event information table (EIT) data. Also in the present embodiment, the apparatus searches for any corresponding programmes which are available over the Internet, for example as part of an on-demand service. Content can be streamed over the Internet or downloaded, for example to the internal hard disk of a PVR.

In the present embodiment, each programme is identified by a content reference identifier (CRID). Each CRID is unique to a particular content item, such as a particular TV show or movie, and is the same for all instances of that content. That is, even when the content is broadcast in a plurality of formats (e.g. SD, HD and 3D) and is available over the Internet, all programmes which include the content have the same CRID regardless of the source from which the programme is received and the format in which the programme is provided. Searching for corresponding programmes thus comprises searching for other programmes which have the same CRID as the selected programme. Also, when corresponding programmes are simulcast in different qualities (e.g. broadcast simultaneously in SD and HD on different channels), the programmes can be identified using the linkage descriptor defined in the DVB Standard (EN 300 468).

Additionally, the apparatus may search a local storage unit, for example an internal hard disk, or a locally networked storage unit, to find any programmes corresponding to the selected programme. The local storage unit and the locally networked storage unit may each be a hard disk, or may be another form of storage such as a flash memory drive or optical disc drive. Specifically, programmes can be recorded to a storage unit from the broadcast stream or Internet, to be viewed at a later time. Searching the storage unit for corresponding programmes may be advantageous when the user has forgotten that they have previously recorded the same content to the storage unit, or when the current user is unaware that a different user has already recorded the same content to the storage unit. The apparatus may automatically record a programme without the user's knowledge, for example based on known viewing habits of the user. Furthermore, it is possible that the content has previously been recorded at higher quality than the currently selected programme, for example recorded in HD when the selected programme is in SD. By searching the broadcast stream, Internet and storage unit for corresponding programmes the apparatus can ensure that a user is provided with the opportunity to watch the selected content in the highest-quality format available.

In order to search the Internet for corresponding programmes, the apparatus is configured to access the Internet via a network connection. In the present embodiment, the apparatus searches a particular location on the Internet, based on received information which specifies a location at which a programme is available. The received information can be referred to as 'link information', since it provides a link to content on the Internet.

The link information may be included in the broadcast stream or may be received over the Internet. For example, a broadcast stream may include a plurality of content information items which each define a particular programme that is available over the broadcast stream. In a DVB system, the content information items are the events defined in the EIT. A content information item may specify information such as a channel on which the programme is to be broadcast, a time at which the programme will be available, and a format in which the programme will be provided (SD, HD or 3D). Separate link information can be associated with each content information item, to specify a location on the Internet at which the programme is available (i.e. the programme defined by that content information item). This allows an individual location to be associated with each programme, enabling the apparatus to quickly navigate to the specific location where the programme can be found.

When the apparatus is a DVB-compatible receiver, the link information can be provided as additional data which is added to each event in the EIT. In one embodiment, the link information stored with each event comprises a uniform resource locator (URL) pointing to the location on the Internet at which the programme can be found. The apparatus can then navigate to the URL in order to provide the programme. The URL may point directly to the content, or could link to a web page that would play the programme when the apparatus navigates to that page.

Alternatively, in another embodiment, a generic URL prefix is stored in a Service Description Table (SDT), a Network Information Table (NIT) or a Bouquet Association Table (BAT) of the broadcast stream. These tables are defined in EN 300 468. The EIT then stores data which is appended to the URL to give an Internet address at which the corresponding programme can be found. In this case, the link information comprises both the URL prefix and the data stored in the EIT. The data to be added to the URL could be existing EIT data such as the EVENT_ID or CRID, or could be new data specifically added to the EIT to link to the content on the Internet. Furthermore, multiple entries of the EIT data to be added to the URL can be provided, so that a single event can be linked to a plurality of programmes at different locations on the Internet. Each event in the EIT can have new data added to indicate which entry in the SDT/NIT/BAT is the relevant one, and to optionally indicate a time period during which the content will be available from the location. Also, information about the quality of a programme (e.g. SD, HD or 3D) can be stored in the EIT data or the SDT/NIT/BAT data.

In the third step 103, if no corresponding programmes are found then the apparatus retains the original selection (cf. final step 107). However, if corresponding programmes are found, then in the fourth step 104 a user is offered the choice of selecting one of the corresponding programmes as an alternative to the selected programme, i.e. the programme originally selected in the first step 101. In the present embodiment, the apparatus displays a list of the selected programme and corresponding programmes via the television, using an on-screen display. The user then selects one of the programmes from the displayed list using an input device such as a remote control.

As an example, the programme originally selected in the first step 101 may be an SD broadcast of a particular TV show. By searching for programmes available in the broadcast stream, over the Internet, and on the hard disk, which have the same CRID, the apparatus can find other instances of the TV show which may be preferred by the user. That is, the same TV show may be broadcast as an HD programme and/or 3D programme on another channel, and may be available at different times on different channels. The TV show may also be available on-demand over the Internet, allowing the user to view it at any time. The TV show may also have previously been recorded to the hard disk in HD. Therefore by displaying a list of corresponding programmes available from the broadcast stream, Internet and hard disk, the user is given the option of selecting a programme which may be broadcast in higher quality, or at a more convenient time, than the originally selected programme.

In the fifth step 105, the apparatus determines whether a user has selected one of the corresponding programmes from the list. If one of the corresponding programmes has been selected, then the apparatus proceeds with this programme instead of the originally selected programme (i.e. the programme selected in the first step 101). For example, if the originally selected programme was a programme selected for recording, the apparatus will proceed to schedule recording of the corresponding programme chosen by the user instead of recording the originally selected programme.

Alternatively, the user can choose not to select one of the corresponding programmes from the list. In this case, in the seventh step 107, the apparatus proceeds with the originally selected programme.

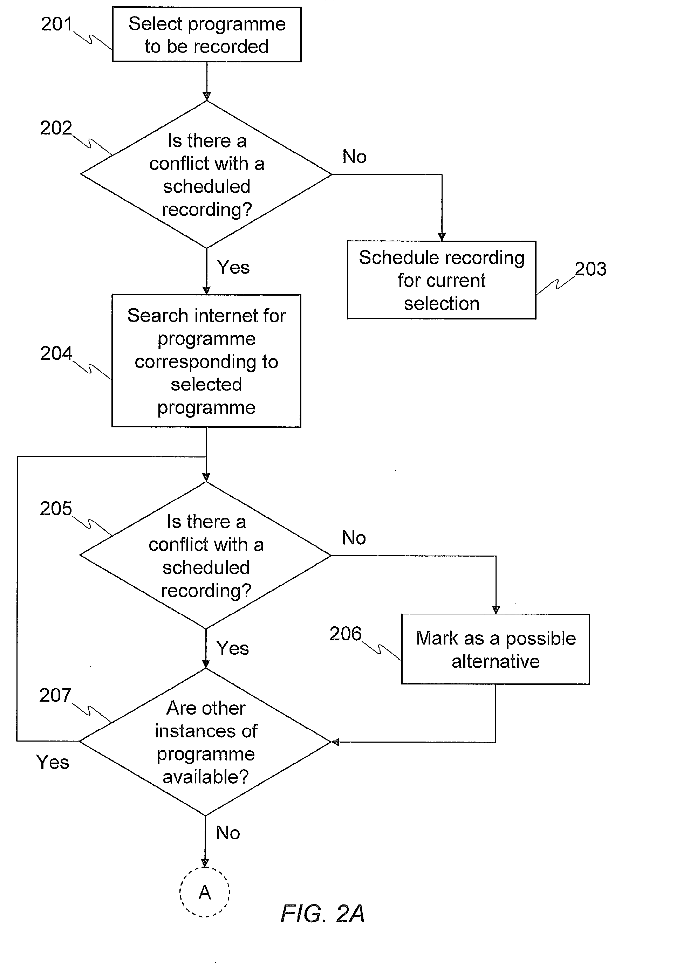

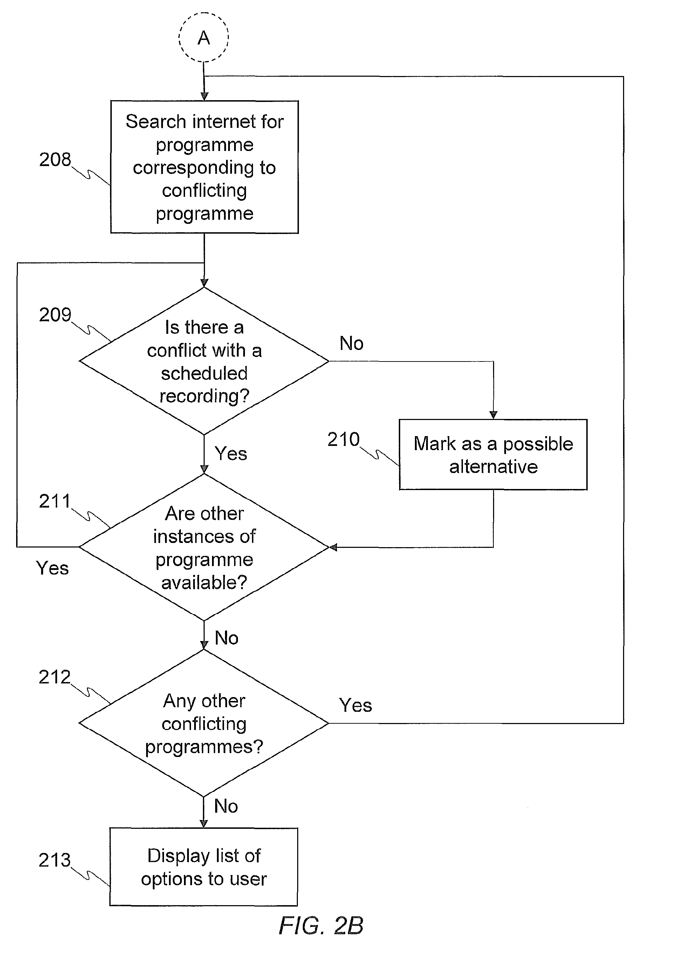

Referring now to Figs. 2A and 2B, a method of resolving a recording conflict is illustrated, according to an embodiment of the present invention. The method steps shown in Fig. 2B continue from point 'A' of Fig. 2A. A recording conflict occurs when a programme is selected for recording that is scheduled to be broadcast at the same time as another programme is due to the recorded, but the apparatus is unable to record both programmes simultaneously. The method may be implemented in a PVR or any other apparatus which is capable of receiving and recording programmes.

In the first step 201, a programme is selected for recording. As described with reference to Fig. 1, a programme may be selected by a user or may be automatically selected based on the user's viewing habits. Alternatively, in Fig. 2, the step 201 of selecting a programme may comprise a method such as the one shown in Fig. 1, whereby a user selects a programme and a search is then carried out for corresponding programmes, before finally selecting to proceed with either the original selection or one of the corresponding programmes.

In the second step 202, the apparatus checks whether the programme selected in the first step 201 conflicts with a previously booked programme. In more detail, a user can select programmes to be recorded in the future, i.e. to be recorded when the programme is broadcast. Also, programmes may be automatically selected for recording based on a user's viewing habits. However, there may be a limit as to how many programmes can be recorded at any given time. In the present embodiment, the apparatus is not able to record more than one programme simultaneously. As such, a programme selected for recording cannot be recorded if another programme is already scheduled to be recorded at the same time as the selected programme.

To determine whether there is such a conflict, the apparatus compares the scheduled broadcast time of the selected programme to the scheduled broadcast times of any previously booked programmes (i.e. programmes previously booked for recording). If none of the previously booked programmes are scheduled for recording during a broadcast time of the selected programme, there is no conflict and the apparatus proceeds to schedule recording of the selected programme (third step 203).

However, if there is a conflict, then in the fourth step 204 the apparatus searches for a programme corresponding to the selected programme, by searching for programmes which are available in the broadcast stream or over the Internet. The apparatus can also search the internal hard disk for any previously recorded programmes which have the same identifier as the selected programme. Here, the apparatus searches for a corresponding programme in a manner similar to that previously described with reference to Fig. 1 (cf. second step 102 of Fig. 1).

Next, in the fifth step 205, the apparatus compares a scheduled broadcast time of the corresponding programme to the scheduled broadcast times of previously booked programmes, to determine whether the corresponding programme conflicts with a previously booked programme. This step is similar to the second step 202, but is directed towards a corresponding programme rather than the selected programme. If there is no conflict, then in the sixth step 206 the apparatus marks the particular corresponding programme as a possible alternative to the selected programme. To mark a particular programme as a possible alternative, the apparatus may store information about the programme in a cache. The information may be a flag which can be set to one value if the programme is not a suitable alternative, for example if the programme conflicts with a previously booked recording, and set to another value if the programme is suitable for use as an alternative to the selected programme, for example if the programme does not conflict.

Next, in the seventh step 207, it is determined whether any other corresponding programmes are available from the broadcast stream, Internet or hard disk. To determine whether other corresponding programmes are available, the apparatus again searches for programmes in a similar manner to that described above with reference to fourth step 204.

Referring back to the fifth step 205, if there is a conflict with a previously booked programme, then the apparatus does not mark the corresponding programme as a possible alternative, but instead proceeds directly to the seventh step 207 and determines whether other corresponding programmes are available.

In the seventh step 207, if another corresponding programme is found, the apparatus returns to the fifth step 205 and determines whether the corresponding programme is suitable for use as an alternative. That is, a corresponding programme is suitable if it does not conflict with a previously booked recording.

Once no more corresponding programmes are found at the seventh step 207, the apparatus has found all suitable alternatives to the selected programme, i.e. all corresponding programmes which do not conflict with a previously booked recording. The apparatus then proceeds to the eighth step 208 (Fig. 2B), and searches for a programme corresponding to the conflicting programme in a similar manner to that described above with respect to the fourth step 204.

After finding a programme corresponding to the conflicting programme, the apparatus proceeds through the ninth 209, tenth 210 and eleventh 211 steps to find all possible alternatives to the conflicting programme. These steps are substantially similar to the fifth 205, sixth 206 and seventh 207 steps described above, and as such a detailed will be omitted to maintain brevity. Here, the term 'conflicting programme' refers to a previously booked programme which is scheduled for recording during the broadcast time of the selected programme (i.e. the programme selected in the first step 201).

Although in the present embodiment the apparatus can only record a single programme at a time, it is possible to have multiple conflicting programmes for a single selected programme. For example, the selected programme may be an hour long, and have a broadcast time of 21:00-22:00. In this case there may still be two conflicting programmes each of half-hour duration, one having a broadcast time of 21:00-21:30, and the other having a broadcast time of 21:30-22:00. Therefore it may be necessary to search for alternatives to more than one conflicting programme.

As such, in the twelfth step 212, the apparatus determines whether there are any remaining conflicting programmes for which alternatives have not yet been searched. If there are still conflicting programmes which need to be searched, the apparatus returns to the eighth step 208 and finds suitable alternatives to the conflicting programme in question. Once all conflicting programmes have been searched for suitable alternatives, the apparatus proceeds to the final step 213 and displays a list of all possible options to the user. The user can then select to record an alternative instance of the selected programme, or can reschedule the previously booked recordings by selecting one of the alternatives found for each conflicting recording.

If all conflicts have been resolved, either by rescheduling or cancelling each conflicting programme, the user can have the option of scheduling recording for the originally selected programme.

As a further option, the user can select to cancel recording of the selected programme or any of the conflicting programmes. For example, the originally selected programme may be an HD broadcast of a particular TV show, but the only suitable alternatives found may all be SD broadcasts. Therefore the user may not wish to reschedule the selected programme even though alternatives have been found, and may instead cancel or reschedule the conflicting programmes. If no suitable alternatives have been found for any of the conflicting programmes or the selected programme, then the user may only choose between cancelling recording of the selected programme and cancelling all of the previously booked programmes (cf. eleventh step 211).

Using the above method, it is possible to offer a user a range of options for overcoming a conflict with a previously booked recording, when selecting a programme to be recorded. In particular, by searching the Internet for programmes corresponding to the selected programme, it may be possible to find a corresponding programme which is available at any time, for example available on-demand. This may be particularly advantageous when trying to overcome a conflict with a previously booked programme, since the corresponding programme may be recorded at any convenient time, for example, could be downloaded immediately. Also, by searching for corresponding programmes on a local storage unit or locally networked storage unit, such as a hard disk, the user can be informed as to whether the same content has previously been recorded, in which case it may be possible to cancel the selected recording instead of rescheduling.

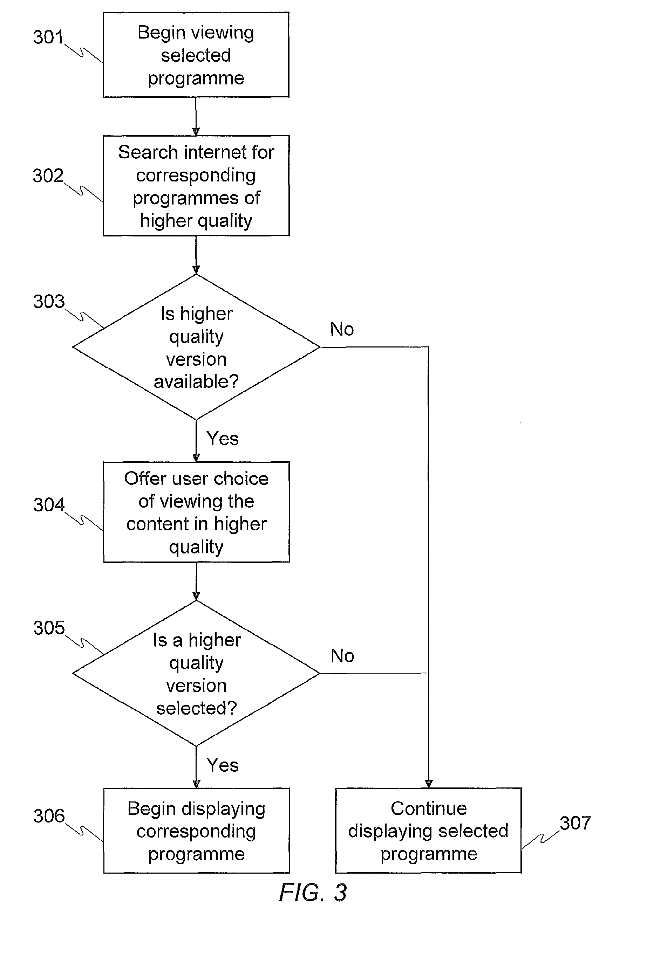

Referring now to Fig. 3, a method is illustrated according to a further embodiment of the present invention. As with Figs. 1, 2A and 2B, the method of Fig. 3 may be suitable for use in any apparatus such as a PVR or TV. The method of Fig. 3 relates to a programme which is selected for viewing, and as such it is not necessary for the apparatus to have any recording capability.

In the first step 301, a user selects a programme for viewing, for example by switching to a channel on which the programme is currently being broadcast. Next, in the second step 302, the apparatus searches for corresponding programmes which are available in the broadcast stream or over the Internet.

To search for the programmes corresponding to the selected programme, the apparatus may use a method similar to that described above with reference to Fig. 1 (cf. second step 102 of Fig. 1). In particular, in the present embodiment, the apparatus searches for corresponding programmes which are available in a higher-quality format to the currently selected programme. That is, if the selected programme is broadcast in SD format, the apparatus searches for corresponding programmes in HD or 3D. If the selected programme is broadcast in HD format, the apparatus searches for corresponding programmes in 3D. If the apparatus has the capability to record programmes, for example is a PVR, the apparatus can also search an internal storage unit for corresponding programmes.

In the third step 303, it is determined whether any corresponding programmes of higher quality have been found. If not, the apparatus continues to display the selected programme (cf. final step 307). If corresponding programmes have been found, then the apparatus proceeds to offer the user the choice of selecting one of the corresponding programmes in order to view the content in a higher quality (cf. fourth step 304).

In the fourth step 304, the apparatus can use an on-screen display OSD to display information relating to the selected programme and corresponding programmes. The information may include detailed information about each one of the programmes, such as a source from which the programme is available, a broadcast time, and a broadcast quality (SD, HD or 3D). Alternatively, the information may not refer explicitly to a particular programme, but may identify the various options based on programme characteristics such as broadcast quality. For example, the OSD may give a user the option to view the content in SD (i.e. the selected programme), or to view the content in HD (i.e. a corresponding programme in HD), without explicitly identifying the programme which is selected by each option. Then, the user selects one of the options, for example by using an input device such as a remote control.

In the fifth step 305, if the user does not select one of the corresponding programmes, then the apparatus continues to display the currently selected programme (cf. final step 307). However, if the user does select one of the corresponding programmes, then in the sixth step 306 the apparatus begins displaying that programme instead of the originally selected programme.

Using a method such as the one shown in Fig. 3, it can be ensured that content is viewed in the highest quality available. Because the programme selected in the first step 301 is a programme selected for immediate viewing, it can be assumed that the user would like to view the content at the present time. As such the apparatus can be configured to only search for corresponding programmes which are currently being broadcast and which started at the same time as the selected programme. Alternatively, the apparatus could present the user with a list of all corresponding programmes available in higher quality, i.e. even those which will be broadcast at a later time. By searching the Internet and hard disk (if present), it may be possible to find higher-quality content which is available on-demand (e.g. for immediate download), even when higher-quality versions are not currently available in the broadcast stream.

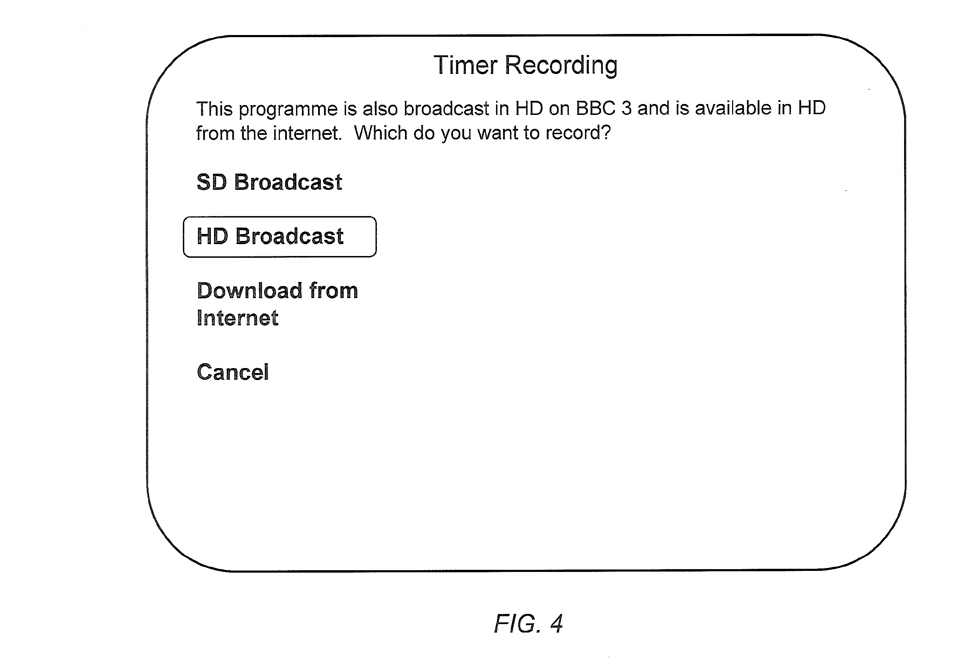

In Fig. 4, an on-screen display OSD menu is illustrated according to an embodiment of the present invention. The OSD menu could be used when a programme is selected for recording. For instance, the menu could be used in the sixth step 206 of Fig. 2A, to display a list of alternatives to a user. In the example shown in Fig. 4, the selected programme is in SD, and corresponding programmes in HD have been found on a different channel (BBC 3) and on the Internet. The user can select whether to record the selected programme ('SD broadcast'), the corresponding HD programme on BBC3 ('HD broadcast'), download the HD programme from the Internet ('Download from Internet'), or cancel the recording altogether ('Cancel'). In the example shown, a user has highlighted the 'HD broadcast' option, i.e. the option to display a corresponding programme which is in HD.

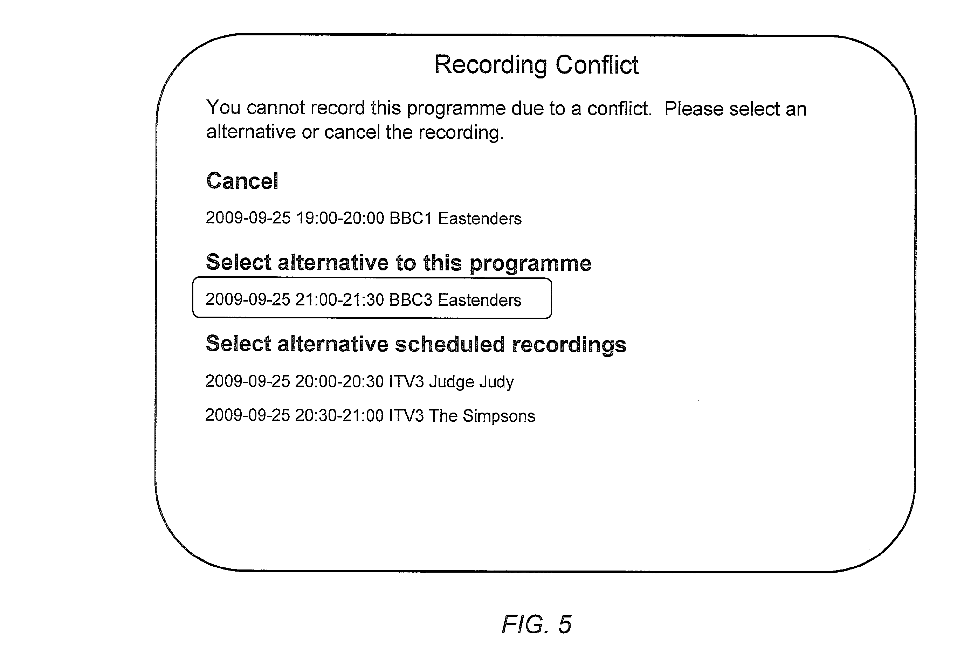

Referring now to Figs. 5 to 8, OSD menus are illustrated according to embodiments of the present invention. These menus are displayed when a recording conflict is detected. For example, each menu could be displayed in the final step 213 of Fig. 2B.

In Fig. 5, a user has highlighted the option to select a programme corresponding to the selected programme. This has the effect of rescheduling recording of the TV show in question ('Eastenders') by selecting to record a corresponding programme which does not conflict with a previously booked recording. The OSD menu of Fig. 5 also differs from that of Fig. 4, by showing detailed information about each particular programme.

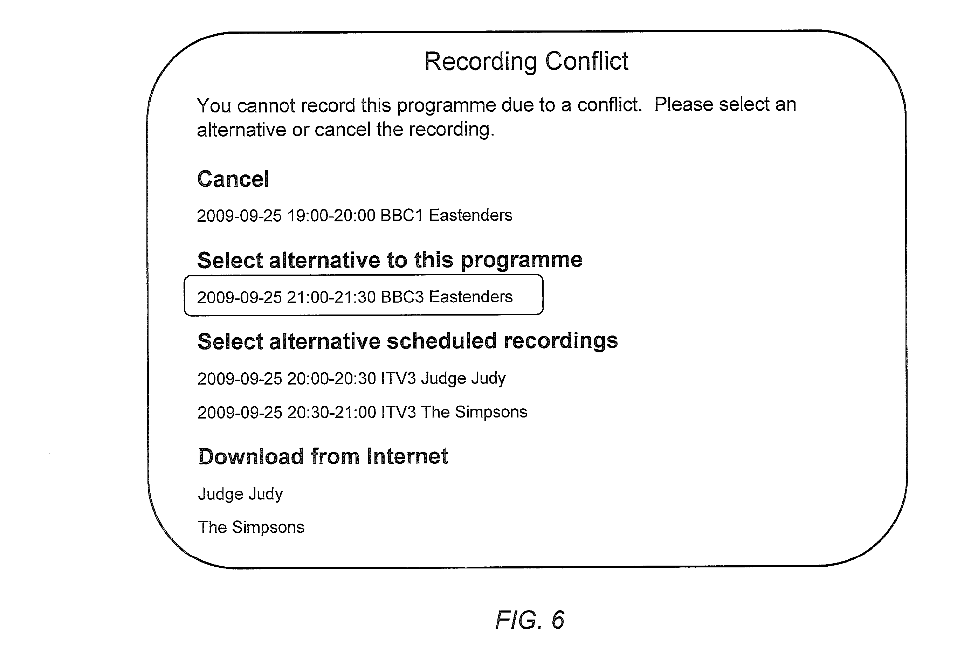

In Fig. 6, an OSD menu similar to the one of Fig. 5 is illustrated. In the OSD menu of Fig. 6, alternatives to the conflicting recordings have also been found on the Internet. These are available for download at any time, and hence do not have a specific broadcast time. Because these can be downloaded at any convenient time, the user is free to cancel the recording of the broadcast versions of these shows (i.e. the previously booked recordings).

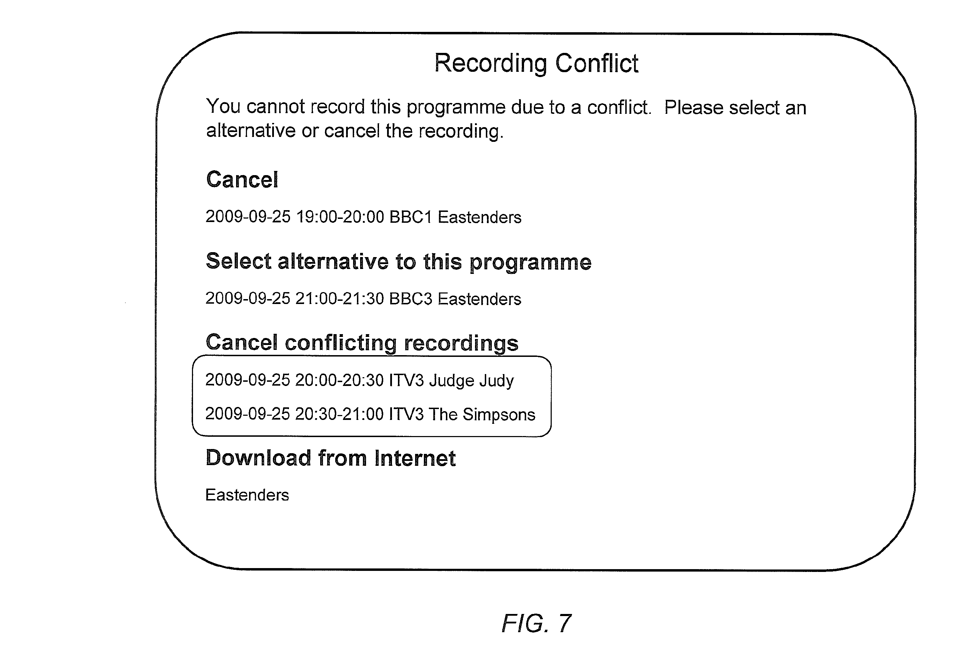

In Fig. 7, no alternatives to the conflicting recordings have been found, and so there is only an option to cancel (i.e. rather than reschedule) these recordings. However, alternatives to the selected programme have been found both in the broadcast stream and on the Internet.

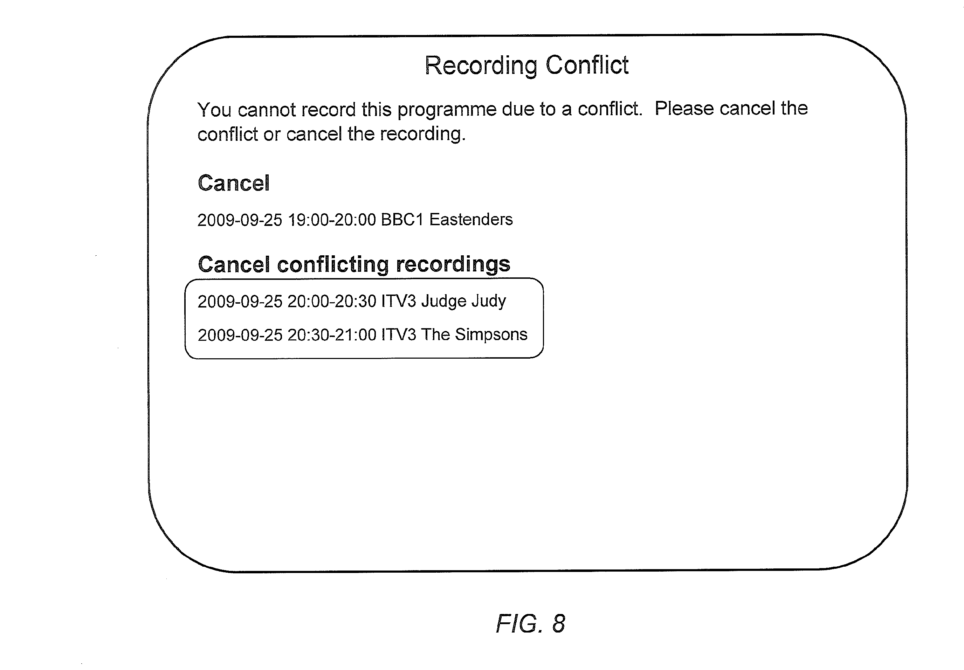

In Fig. 8, no suitable alternatives have been found to either the selected recording or the conflicting recording. Therefore the user only has the options of cancelling the selected recording, or cancelling the conflicting recordings.

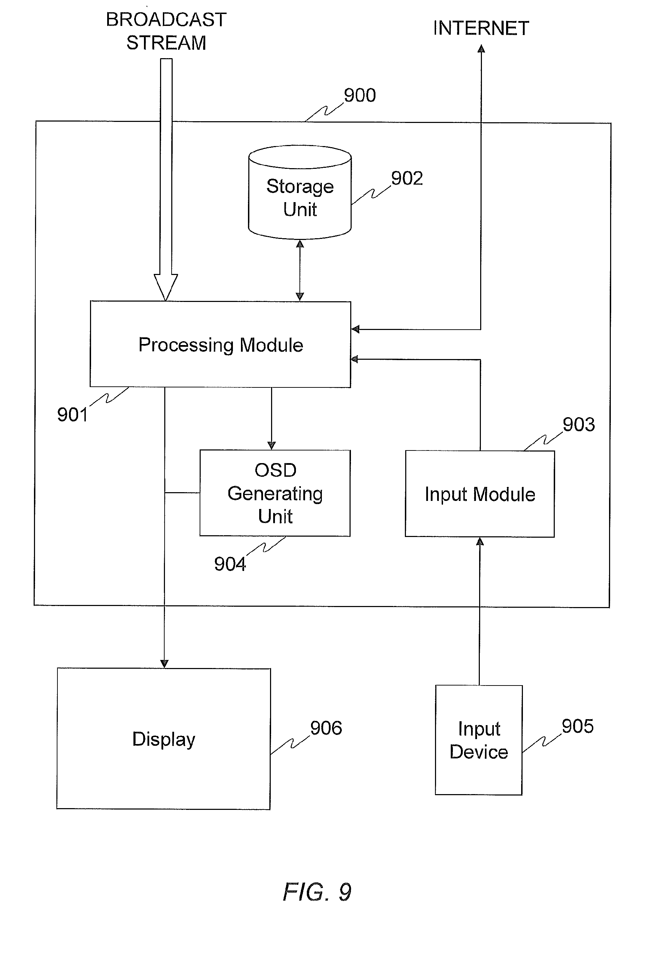

Referring now to Fig. 9, a PVR is schematically illustrated according to an embodiment of the present invention. In Fig. 9, certain components of the PVR have been omitted for clarity. Also, elements of the PVR illustrated in Fig. 9 (such as the processing module, input module and OSD generating unit) may be implemented as software modules in a computer program which is executed on a processor of the PVR. The PVR is suitable for performing the methods described above with reference to Figs. 1 to 3. In the present embodiment, the PVR is a DVB-compatible receiver.

The PVR 900 comprises a processing module 901, a storage unit 902, an input module 903, and an on-screen display OSD generating unit 904. In the present embodiment the storage unit 902 is an internal hard disk of the PVR 900, but in other embodiments the storage unit 902 could be a locally networked hard disk or other form of non-volatile storage. The processing module 901 receives a broadcast stream including a plurality of programmes (referred to as 'events') and event information table (EIT) data containing information about the programmes. The broadcast stream is decoded to extract audio-visual data for a programme currently being broadcast on a selected channel, and this data is sent to a display 906 to be viewed by a user.

The processing module 901 is configured to receive information defining a selected programme. In the present embodiment, this information is received from an input module 903 which receives commands from an input device 905. The input device, which may be a remote control, is manipulated by a user in order to select a programme from the broadcast stream, Internet or storage unit 902. In another embodiment, a programme selection module may be included in the PVR 900 to automatically select a programme without user input and send information defining the selected programme to the processing module 901.

The processing module 901 is configured to search for programmes corresponding to the selected programme. As shown in Fig. 9, the processing module 901 is connected to the Internet to search for corresponding programmes. Also, the storage unit 902 can record programmes from the broadcast stream and the Internet. Therefore in the present embodiment, the processing module 901 can search for corresponding programmes available in the broadcast stream, Internet and storage unit 902, using a method such as that described above with reference to Fig. 1 (cf. second step 102 of Fig. 1). Hence, when a user selects to view a programme, the PVR 900 can search for any corresponding programmes that contain the same content as the selected programme but in a higher quality. Also, when a user selects a programme for recording, the PVR 900 can determine whether the same content has already been recorded to the storage unit 902, or whether the same content is available over the Internet in a corresponding programme.

The on-screen display OSD generating unit 904 can be controlled by the processing module 901 to display information relating to the corresponding programmes on the display 906. Using the input device 905, a user can select one of the corresponding programmes to be viewed or recorded instead of the originally selected programme.

Whilst certain embodiments of the present invention have been described above, it will be clear to the skilled person that many variations and modifications are possible without departing from the scope of the invention as defined in the claims.

Embodiments of the present invention have been described in which a user is offered a choice between a selected programme and other programmes corresponding to that programme. However, in other embodiments, the choice may be made automatically. For example, when a programme corresponding to a selected programme is available in higher quality than the selected programme (i.e. 3D or HD versus SD), the apparatus could be configured to automatically switch to the higher-quality corresponding programme. Also, a selection could be made automatically as a default option, if no user input is received within a predetermined time after displaying a list of options. For instance, when displaying a list of options for resolving a conflict (cf. Fig. 6), the apparatus may automatically cancel the selected programme if no user input is received within 1 minute. This provides a default course of action in the event that a dialogue screen times out.

Furthermore, embodiments of the present invention have been described which comprise a PVR that can record programmes from the broadcast stream and Internet. However, in other embodiments of the present invention, methods such as those shown in Figs. 1 and 3 may be implemented on apparatus which does not have the capability to record programmes. For example, the apparatus may comprise a digital television which does not have internal storage for recording programmes. In this case, the selected programme is a programme selected for viewing, and the apparatus searches for corresponding programmes which are available in the broadcast stream or over the Internet (i.e. does not search an internal hard disk because none is present).

Whilst certain embodiments of the present invention have been described above, it will be clear to the skilled person that many variations and modifications are possible while still falling within the scope of the invention as defined by the claims. Any feature of any embodiment described may be used in combination with any feature of a different embodiment.

## Claims

1. An apparatus comprising:
an input module arranged to receive information relating to a selected programme, the selected programme being associated with an identifier; and a processing module arranged to search for programmes corresponding to the selected programme by searching information relating to programmes available in first and second sources for programmes having the same identifier as the selected programme, wherein the first source comprises a broadcast stream.

2. The apparatus of claim 1, wherein the second source comprises the Internet or a source of recorded programmes.

3. The apparatus of claim 2, wherein the source of recorded programmes comprises a local storage unit or a local network.

4. The apparatus of claim 2 or 3, wherein when a programme is recorded the apparatus is configured to store the programme identifier in association with the recorded programme.

5. The apparatus of any one of the preceding claims, wherein the corresponding programmes comprise programmes broadcast in a plurality of different quality formats and the apparatus is arranged to provide a corresponding programme having a higher quality as an alternative to the selected programme.

6. The apparatus of claim 5, wherein the corresponding programme is available at a different time to the selected programme.

7. The apparatus of any one of the preceding claims, wherein the selected programme is a programme selected for recording, wherein the apparatus is arranged to determine whether the selected programme is scheduled to be broadcast at a time which conflicts with a broadcast time of a previously booked programme, the previously booked programme being a programme that has been scheduled for recording.

8. The apparatus of claim 7, wherein in the event of a conflict, the apparatus is further configured to search for programmes corresponding to the selected programme which do not conflict with the previously booked programme, or to search for programmes corresponding to the previously booked programme which do not conflict with the selected programme.

9. The apparatus of claim 8, configured to search for programmes corresponding to the selected programme or previously booked programme by searching for programmes available in the broadcast stream, on the Internet, and amongst a plurality of recorded programmes.

10. The apparatus of claim 8 or 9, configured to schedule one of the corresponding programmes to be recorded instead of the selected programme or the previously booked programme.

11. The apparatus of any one of the preceding claims, wherein the broadcast stream includes link information specifying a location on the Internet at which a programme corresponding to the selected programme is available, the processing module being arranged to navigate to the location to provide the corresponding programme.

12. The apparatus of claim 11, wherein the broadcast stream comprises a plurality of content information items defining programmes available via the broadcast stream.

13. The apparatus of claim 12, wherein the link information is associated with each of the content information items.

14. The apparatus of claim 12 or 13, comprising a DVB compliant apparatus, wherein the content information items comprise Event Information Table EIT events and the link information is stored with each of the EIT events.

15. The apparatus of claim 13 or 14, wherein the link information comprises the address of the corresponding programme.

16. The apparatus of claim 14, wherein data is stored in a Service Description Table SDT, a Network Information Table NIT or a Bouquet Association Table BAT of the broadcast stream to provide a URL prefix, and the EIT stores data which is added to the URL to specify the address of the corresponding programme on the Internet.

17. The apparatus of claim 12, wherein the link information is separate from the content information items.

18. The apparatus of any one of claims 11 to 17, wherein the broadcast stream further includes information relating to a time period during which a corresponding programme will be available from the specified location.

19. The apparatus of any one of the preceding claims, wherein the identifier is a content reference identifier CRID.

20. A method comprising:
receiving information defining a selected programme, the selected programme being associated with an identifier; and searching for programmes corresponding to the selected programme by searching information relating to programmes available in first and second sources for programmes having the same identifier as the selected programme.

21. A computer program which, when executed by a processor, is arranged to perform a method according to claim 20.
